# EUROPEAN PATENT APPLICATION

(11) **EP 1 852 957 A2**
(43) Date of publication of application: **07.11.2007**
(21) Application number: 07008710.1
(22) Date of filing: 27.04.2007
(51) Int. Cl.: H02K 5/04, H02K 5/24

(54) **Motor for electric power steering**

(30) Priority: 02.05.2006 JP 2006128520; 30.05.2006 JP 2006150026; 24.07.2006 JP 2006200808
(71) Applicant: NSK Ltd., Shinagawa-ku Tokyo (JP)
(72) Inventor: Hirakawa, Tomohisa, Maebashi-shi Gunma 371-8527 (JP); Nagano, Suguru, Maebashi-shi Gunma 371-8527 (JP); Shinzou, Takahiro, Maebashi-shi Gunma 371-8527 (JP)
(74) Representative: Grünecker, Kinkeldey, Stockmair & Schwanhäusser Anwaltssozietät

(57) **Abstract**

A motor 1 for electric power steering has a motor section 12 for generating rotary torque and a motor cover 11 which houses the motor section 12 and is fixed to a column. The motor cover 11 has a yoke section 21 and a flange section 22 which is disposed at one end of the yoke section 21 and fixed to the column at a plurality of positions. The yoke section 21 has at least one rib 50A (50B) provided on an exterior surface located between positions where the flange section 22 is fixed to the column.

## Description

### BACKGROUND OF THE INVENTION

The present invention relates to an improvement on a motor used in electric power steering assisting manual steering power in connection with steering of a vehicle or the like.

Further, the present invention relates to a rotating electrical machine, and more particularly, to a reduction in the weight, space, and noise of an EPS motor which houses a rotor and a stator and is equipped with a yoke for rotatably supporting a rotary shaft of the rotor and a flange for closing an open section of the yoke.

Still further, the present invention relates to a motor mount structure applicable to an electric power steering (EPS) and the like.

In connection with steering of a vehicle or the like, a brush-type DC motor, a brushless DC motor, or the like, is usually employed in an electric power steering system used for assisting manual steering power. With a view toward enhancing the comfortableness, or the like, of a vehicle to be mounted, this electric power steering system is requested to lessen generation of vibration and operating noise. This also applies to a DC motor used in an electric power steering system.

There is proposed, as a motor (a rotating electrical machine) contrived to suppress generation of vibration and operating noise, a motor which includes, e.g., a plurality of frame ribs arranged at a predetermined interval in a circumferential direction and which arranges the frame ribs at nonuniform intervals, to thus prevent a natural vibration mode of the frame from coinciding with an excitation mode of electromagnetic exciting force developing in a stator core (see, e.g., Patent Document 1).

Moreover, there is proposed, as a substance which reduces vibration and noise stemming from electromagnetic excitation force of a motor (a rotating electrical machine) and which reinforces joints between a support section and a motor frame and the rigidity of the frame, a motor including a stator core provided in the motor; a frame having into an inner radius thereof the stator core press-fitted; an edge plate coupled to the frame; a rotor coupled to the edge plate via a bearing; and a supporting member for fixing one end of the frame in a longitudinal direction thereof. A reinforcing member is longitudinally provided at a plurality of positions in the circumferential direction of the frame coupled to the supporting member. The reinforcing member and the supporting member are coupled together, to thus support the motor (see, e.g., Patent Document 2).
[Patent Document 1] JP-A-9-51648
[Patent Document 2] JP-A-2001-128410

Further, various motors, such as EPS motors used in an electric power steering system, have already been proposed as a rotating electrical machine. When the EPS motor is configured, a motor having a cylindrical frame (yoke) with a bottom and a bracket (flange) for closing the open section of the frame has been proposed in order to reduce the number of parts, instead of use of a cylindrical frame and two brackets for closing both ends of the frame as a container for housing a rotor and a stator (see Patent Document 3).
[Patent Document 3] JP-A-2002-354755

Still further, each of automobiles which become complicated from day to day must be equipped with EPS, and there are many cases where EPS of single design is mounted in vehicles of different models. For these reasons, an increase in the degree of mount freedom of the EPS is desired.
[Patent Document 4] JP-A-2001-180506

However, a related-art motor for electric power steering is configured so as to be attached to a column at a few number of locations because of the layout of the motor in a vehicle or the like. Accordingly, when subjected to mechanical vibration or electric vibration, the motor is likely to cause vibration while taking the attached positions as fulcrums, and hence further improvement is required.

Further, in relation to the EPS motor, an increase in rigidity, such as mounting rigidity or vibration rigidity, has been sought with an increase in output. Mere adoption of a conventional structure of an EPS motor results in a concern about an increase in weight being associated with an increase in rigidity. Specifically, in the case of a structure where an annular attachment section is formed on the open section of the cylindrical frame (yoke) having a bottom and where the attachment section and the bracket (flange) are bolted together, an annular attachment section must be formed in the frame in order to fix the cylindrical frame having a bottom to the bracket (flange), and the weight of the EPS motor is increased correspondingly. When the EPS motor is used as one element of the steering system, the weight of the EPS motor is increased, which in turn results in an increase the weight of the steering system. Further, the outer diameter of the steering system is also increased. Thus, using the EPS motor as an element is not preferable in view of an on-board layout.

Further, there may arise a case where, as a result of an increase in the weight of the EPS motor, noise is induced by vibration caused when the EPS motor is subjected to mechanical or electrical excitation or noise is induced by natural vibration of a yoke or stator of the EPS motor itself.

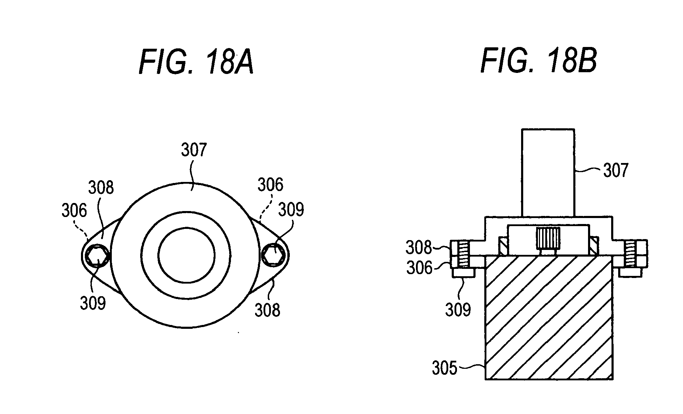

Still further, Figs. 18A and 18B show a related-art motor mount structure. As illustrated, clamping projections 306 projecting in a radial outside are provided on a motor 305, and clamping sections 308 corresponding to the clamping projections 306 are provided at positions on a gear box 307 (a motor-fixed side) opposing the clamping projections 306. The clamping projections 306 and the clamping sections 308 are clamped together by means of bolts 309 aligned in the axial direction of the motor, thereby fixing the motor 305.

This clamping method requires provision of the clamping projections 306 projecting outside from the motor 305, which raises a problem of deterioration of the ease of layout of the EPS to be set in a narrow space. Specifically, even when the design of a vehicle is changed or when an EPS of single design is used for vehicles of different models, a space for the clamping projections 306 must be inevitably ensured, which presents a problem of a hindrance being placed in the degree of mounting freedom.

In view of the circumstances, the present invention aims at providing a motor mount structure which enables an increase in the degree of mounting freedom of a motor.

### SUMMARY OF THE INVENTION

The present invention is conceived in light of the situation and aims at providing a motor for electric power steeringwhich enables a reduction in the amplitude of vibration, damping of vibration, and lessening of generation of vibration noise and operating noise even when the motor has undergone mechanical vibration or electrical vibration and, as a matter of course, in ordinary times.

To achieve this object, according to the present invention, there is provided a motor for electric power steering including:
a motor section for generating rotational torque, and
a motor cover which houses the motor section is fixed to a column, wherein
the motor cover has a yoke section and a flange section which is disposed at one end of the yoke section and fixed to the column at a plurality of positions; and
the yoke section has at least one rib provided on an exterior surface located between positions where the flange section is fixed to the column.

The motor for electric power steering of this configuration has such a structure where at least one rib provided on an exterior surface of the yoke section and located between positions where the flange section is fixed to the column. Hence, the motor cover is reinforced by the rib, and natural vibration is dampened. Consequently, the amplitude of vibration can be reduced; vibration can be dampened; and generation of vibration noise and operating noise can be diminished.

In the motor for electric power steering of the present invention, the rib can be provided along an axial direction of the motor section. By means of such a configuration, deformation, such as warpage of the motor cover and the like, can be prevented further in addition to yielding of the advantage.

Further, the motor for electric power steering may also have such a structure where the rib projects from the yoke section such that clearance is formed between the rib and the exterior surface of the motor section, and the clearance is filled with a damping material. By means of this structure, in addition to yielding of the advantage, the damping material can absorb vibration. Hence, generation of vibration noise and operating noise can also be lessened.

The rib may also be formed integrally with the yoke. In this case, the damping material is provided in clearance between a stator core of the motor and the rib provided on the yoke.

The damping material may be made ofat least one of, e.g., resin and an adhesive. Use of a material having a high damping factor as the damping material enables further lessening of generation of vibration noise and operating noise.

The present invention also provides a motor for electric power steering including a motor section for generating rotational torque and a motor cover which houses the motor section is fixed to a column, wherein
the motor cover has a yoke section and a flange section which is disposed at one end of the yoke section and fixed to the column at a plurality of positions; and
a fillet is formed in areas between locations where the flange section is fixed to the column and at least in a portion of a neighborhood of a boundary between the yoke section and the flange section.

In the motor for electric power steering of this configuration, a fillet is formed in areas between locations where the flange section is fixed to the column and at least in a portion of a neighborhood of a boundary between the yoke section and the flange section. The motor cover is reinforced by the fillet, and natural vibration is dampened. Consequently, the amplitude of vibration can be reduced, and vibration can be dampened. Thus, generation of vibration noise and operating noise can be lessened.

In the case of this configuration, the yoke section can also be provided with at least one rib provided on an exterior surface located between the locations where the flange section is fixed to the column. By means of such a configuration, the motor cover is reinforced by the fillet and the ribs, and natural vibration is dampened. Therefore, the amplitude of vibration can be reduced further, and vibration can be suppressed. Thus, generation of vibration noise and operating noise can be lessened.

In the motor for electric power steering of the present invention, the motor cover can be reinforced by the rib provided on the exterior surface of the yoke section that is a constituent element of the motor cover, and natural vibration can be dampened. Consequently, as a result of the amplitude of vibration being reduced and vibration being dampened, generation of vibration noise and operating noise can be lessened.

In the motor for electric power steering of the present invention, the motor cover can be reinforced by the fillet which is located in areas between the positions, where the flange section, which is a constituent element of the motor cover, is fixed to the column, and which is formed in the vicinity of the boundary between the yoke section and the flange section. Further, natural vibration can be dampened. Consequently, as a result of the amplitude of vibration being reduced and vibration being dampened, generation of vibration noise and operating noise can be lessened.

Further, to achieve the object, according to the present invention, there is provided a rotating electrical machine including:
a rotor fixed to a rotary shaft;
a stator disposed opposite the rotor;
a yoke which is formed into a cylindrical shape with a bottom, houses the rotor and the stator, and rotatably supports a rotary shaft of the rotor; and
a flange for closing the open section of the yoke, wherein
amount section projecting along the rotary shaft is formed on a face of the flange opposing the stator, and
an open section side of the yoke is fixed by the mount section.

According to the present invention, since the yoke and the flange are fixed together by means of the mount section formed on the face of the flange opposing the stator. Hence, an increase in the weight of the entire rotating electrical machine than the case where the mount section is formed on the open section side of the yoke can be suppressed, and the rigidity can be enhanced correspondingly. Further, rigidity against vibration induced by the yoke or the stator can be enhanced. The present invention can contribute to a reduction in the weight, space, and noise of the rotating electrical machine.

According to the present invention, a reduction in the weight and space of the rotating electrical machine and lessening of the noise of the same can be achieved.

Still further, in order to achieve the object, according to the present invention, there is provided a motor mount structure, including:
a motor; and
a motor mount to which the motor is to be fixed, wherein either the motor or the motor mount is provided with a projecting section extending toward a remaining one; the remaining one is provided with a recess section into which the projection section fits; and the recess section and the projecting section are fixed together by means of the fixing member with the motor and the motor mount being fitted together by means of the projecting section and the recess section.

In this configuration, the recess section and the projecting section are fixed (e.g., bolted) together with the motor and the motor mount being fitted together by means of the projecting section and the recess section. Hence, fixing projections, which have hitherto been required, do not need to be provided. Therefore, the ease of layout of EPS to be placed in a narrow space is not deteriorated, and hence an enhanced degree of mounting freedom of EPS is achieved in the case of a change in the design of a vehicle or the use of EPS of a single design for vehicles of different models. Further, since clamping projections do not need to be provided, the weight of a motor can be made light. As a result, the rigidity achieved at a same weight can be enhanced further. Rigidity can be enhanced by means of fitting the motor and the motor mount together over a wide area, which is effective for vibration damping. The motor may be provided with the projection, or the motor mount may be provided with the recess section. Conversely, the motor may be provided with the recess section, and the motor mount may be provided with the projection.

In relation to the previously-described motor mount, in the present invention, the fixing direction of the fixingmember forms a slight angle of; e.g., 3° to 7°, preferably about 5°, with a radial direction of the motor.

Thereby, axial pressing force exerted by the fixingmember can be ensured.

According to the present invention, the motor mount structure has such a shape as that either the motor or the motor mount fits to a remaining one, and is configured such that the motor and the motor mount are fixed together in a radial direction. Hence, a necessity for provision of related-art fixing projections is obviated, and the degree of mounting freedom of EPS can be enhanced without involvement of a decrease in the ease of layout of EPS to be placed in a narrow space at the time of a change in the design of a vehicle or when EPS of a single design is mounted in different models of vehicles. Moreover, related-art fixing projection need not to be provided, and hence light weight can be achieved. The number of bolts used for a same weight can be increased. The motor and the motor mount are fitted together over a wide area, whereby rigidity can be enhanced. Further, the number of bolts is adjusted by means of improved rigidity, thereby suppressing a natural vibration mode attributable to the rigidity used for mounting a motor. As a result, the structure becomes advantageous in terms of vibration, and noise resulting from operation is improved.

### BRIEF DESCRIPTION OF THE DRAWINGS

Fig. 1 is a perspective view of a motor for electric power steering according to a first embodiment of the present invention.
Fig. 2 is a plan view of the motor for electric power steering shown in Fig. 1 acquired when viewed from a position opposite an output side of the motor.
Fig. 3 is a side view of the motor for electric power steering shown in Fig. 1.
Fig. 4 is an enlarged view of a portion of a cross section taken along line IV-IV shown in Fig. 3.
Fig. 5 is a perspective view of a motor for electric power steering of another embodiment of the present invention.
Fig. 6 is a cross-sectional view of a portion of the motor for electric power steering of another embodiment of the present invention corresponding to Fig. 4.
Fig. 7 is a cross-sectional view of a portion of the motor for electric power steering of another embodiment of the present invention corresponding to Fig. 4.
Fig. 8 is a cross-sectional view of a portion of the motor for electric power steering of another embodiment of the present invention corresponding to Fig. 4.
Fig. 9 is a perspective view of a motor for electric power steering of a second embodiment of the present invention.
Fig. 10 is a perspective view of the motor for electric power steering shown in Fig. 9 when viewed from an oblique position opposite an output side of the motor.
Fig. 11 is a plan view of the motor for electric power steering purpose shown in Fig. 9 when viewed from a position opposite the output side of the motor.
Fig. 12 is a view showing, in the form of a cross section, a portion of the motor for electric power steering purpose shown in Fig. 9.
Fig. 13 is a longitudinal cross-sectional view of an EPS motor showing an embodiment of the present invention.
Fig. 14 is an enlarged cross-sectional view of the principal section of the EPS motor.
Figs. 15A to 15C are conceptual renderings for describing an annular secondary vibration mode.
Fig. 16A is a plan view of a motor mount structure provided as an embodiment of the present invention, and Fig. 16B is a side view of the same.
Fig. 17 is an exploded perspective view for describing the state of a motor mounted by means of the motor mount structure.
Fig. 18A is a plan view showing a related-art motor mount structure, and Fig. 18B is a side view of the same.

### DETAILED DESCRIPTION OF THE PREFERRED EMBODIMENTS

Amotor for electric power steering according to preferred embodiments of the present invention will now be described by reference to the drawings. The embodiments described below are exemplifications for describing the present invention, and the present invention is not limited solely to the embodiments. Consequently, the present invention can be implemented in various forms unless otherwise departing from the gist of the invention.

### (First Embodiment)

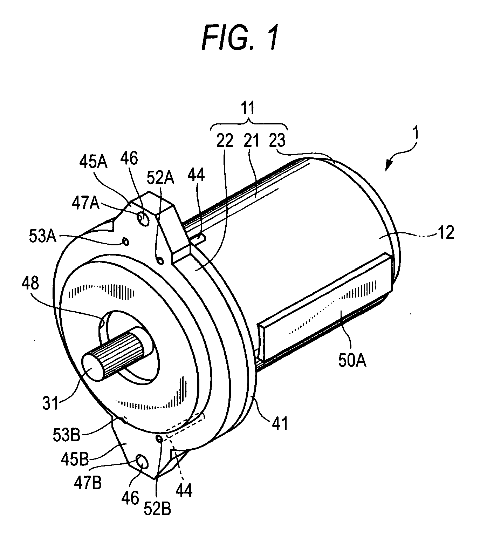

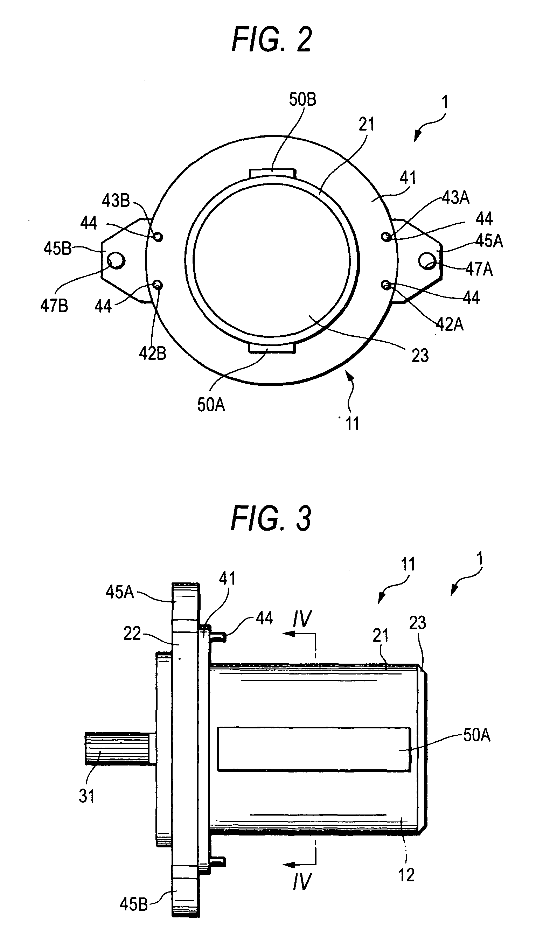

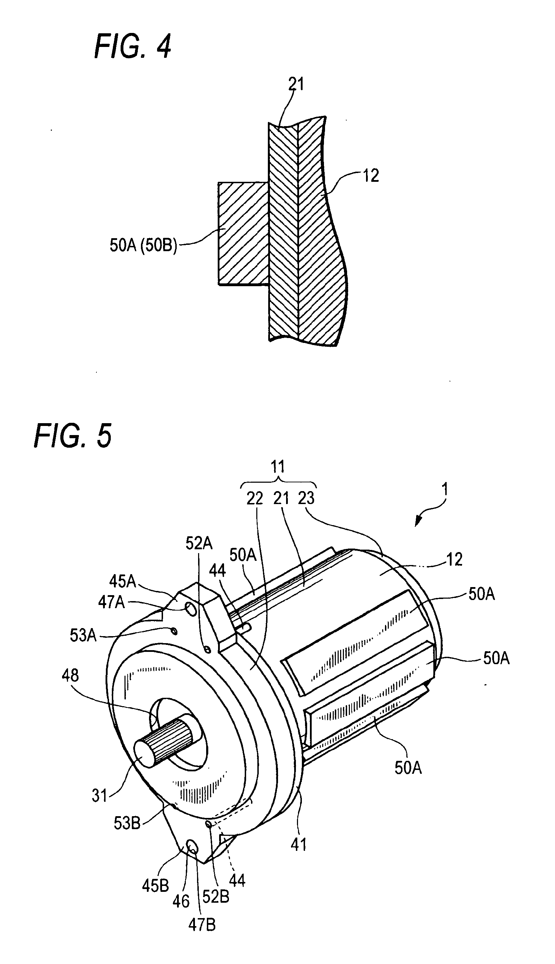

Fig. 1 is a perspective view of a motor for electric power steering according to a first embodiment of the present invention. Fig. 2 is a plan view of the motor for electric power steering shown in Fig. 1 acquired when viewed from a position opposite an output side of the motor. Fig. 3 is a side view of the motor for electric power steering shown in Fig. 1. Fig. 4 is an enlarged view of a portion of a cross section taken along line IV-IV shown in Fig. 3. In the first embodiment, the direction of a rotary shaft of a motor section is described as an "axial direction."

As shown in Figs. 1 through 4, a motor 1 for electric power steering according to the first embodiment has a motor cover 11 whose entirety is formed in an essentially-cylindrical shape and a motor section 12 which is disposed in the motor cover 11 and generates rotary torque. Anunillustratedresolver which is disposed concentrically to the motor section 12 and detects the rotating position of a rotor of the motor section 12, and a resolver supporting member for supporting the resolver within the motor cover 11 are disposed in the motor cover 11.

The motor cover 11 has a hollow motor yoke 21 whose entirety has a predetermined diameter and length; a front flange 22 located at one axial end section (left end sections in Figs. 1 and 3) of the motor yoke 21; and a rear cover 23 situated at the other axial end section of the motor yoke 21 (right end sections in Figs. 1 and 3).

In the motor yoke 21, a flange 41, which is bent externally in a direction orthogonal to the axial direction and integrally formed, is formed on the end section where the front flange 22 is provided. Bolt holes 42A, 43A and bolt holes 42B, 43B are formed in positions on the flange 41 which are about 180° out of phase with each other. Ribs 50A and 50B protruding from the outer surface of the motor yoke 21 are formed, along the axial direction, in an area between the bolt holes 42A and 43A and an area between the bolt holes 42B and 43B, respectively.

Each of the ribs 50A, 50B includes an essentially-rectangular-parallelepiped whose side parallel to the axial direction of the motor yoke 21 is long and whose side orthogonal to the axial direction is short. The inside of the rectangular-parallelepiped is hollow as shown in Fig. 4. The ribs 50A, 50B may also be formed from the same material as that of the motor yoke 21 and integrally with the motor yoke 21. Alternatively, the ribs may also be formed separately from the motor yoke 21 and fixed to the motor yoke 21.

The front flange 22 assumes an essentially-disc-shaped form, and bolt holes 52A, 53A and bolt holes 52B, 53B are formed in the front flange 22. When the front flange 22 is attached to the motor yoke 21, the bolt holes 52A, 53A are brought into mutual communication with the bolt holes 42A, 43A of the motor yoke 21, and the bolt holes 52B, 53B are brought into mutual communication with the bolt holes 42B, 43B. The bolt holes 42A, 43A, 42B, and 43B of the motor yoke 21 are brought into mutual communication with the respective bolt holes 52A, 53A, 52B, and 53B of the front flange 22; and bolts 44 are screw-engaged with the respective bolt holes, whereby the front flange 22 is fixed to the motor yoke 21.

An extended section 45A for attachment purpose, which is to be used for fixing the motor 1 to an unillustrated column, is formed continually to the front flange 22 at the positions where the bolt holes 52A, 53A of the front flange 22 on an outer peripheral surface thereof are formed. An extended section 45B for attachment purpose, which is to be used for fixing the motor 1 to an unillustrated column, is formed continually to the front flange 22 at the positions where the bolt holes 52B, 53B of the front flange 22 on an outer peripheral surface thereof are formed. Specifically, the extended sections 45A and 45B for attachment purpose are formed in positions which are about 180° out of phase with each other. Bolt holes 47A, 47B with whichunillustratedbolts to be fixed to the unillustrated column are to be screw-engaged are formed in the extended sections 45A, 45B for attachment purpose, respectively. Moreover, a through hole 48 through which a rotary shaft 31 of the motor section 12 penetrates is formed in essentially the center of the front flange 22.

A rear cover 23 has an essentially-disc-shaped form, and closes the other axial end section of the motor yoke 21. Although not illustrated specifically, a housing section, or the like, for housing a rear bearing which rotatably supports an end section of the rotary shaft 31, opposite to an output side thereof, of the motor section 12, is formed in the rear cover 23 as desired.

The motor section 12 housed in the motor cover 11 having the above configuration is not limited specifically to a brushless-type motor, a brush-type motor, and the like, so long as the motor section can be used as a motor for electric power steering.

This motor 1 has the configuration in which the ribs 50A and 50B are formed on the exterior surface of the motor yoke 21 in the respective areas located between the two extended sections 45A, 45B for attachment purpose formed on the front flange 22. Hence, the motor cover 11 is reinforced by the ribs 50A, 50B. Natural vibration of the motor cover 11 is damped by the ribs 50A, 50B. Consequently, the amplitude of vibration can be diminished, and vibration is dampened. Further, generation of vibration noise and operating noise can be lessened.

The first embodiment has described the case where the ribs 50A and 50B are formed on the exterior surface of the motor yoke 21, as one rib in one area, in the areas located between the two extended sections 45A, 45B for attachment purpose formed on the front flange 22. However, the present invention is not limited to the embodiment. For instance, as shown in Fig. 5, the number of ribs to be placed can be arbitrarily determined, as desired; for instance, a total of six ribs being positioned such that three ribs are placed in each of the areas.

The first embodiment has described the case where the two extended sections 45A and 45B for attachment purpose are formed in the front flange 22 and where the motor is fixed to the column at two positions. However, the present invention is not limited to this case, and the motor 1 may also be fixed to the column at three positions or more. Moreover, in the first embodiment, the sections 45A and 45B for attachment purpose, which extend in the radial direction of the front flange 22, are formed, and these extended sections 45A, 45B are taken as sections to be fixed to the column. However, the present invention is not confined to this embodiment. The front flange 22 may also be fixed directly to the column without formation of the extended sections 45A, 45B for attachment purpose on the front flange 22.

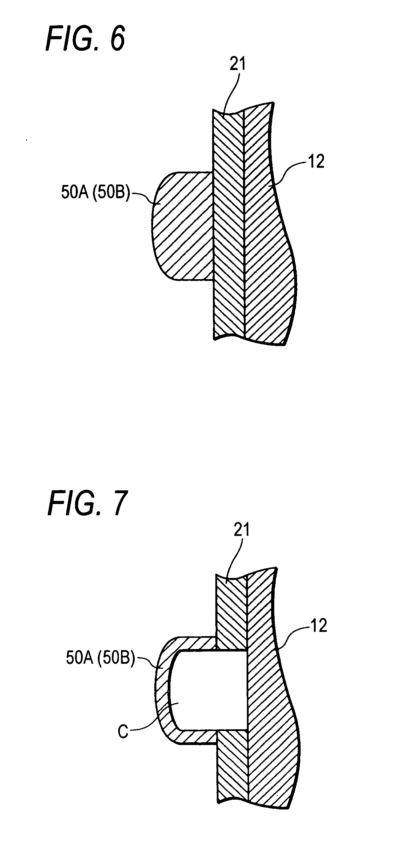

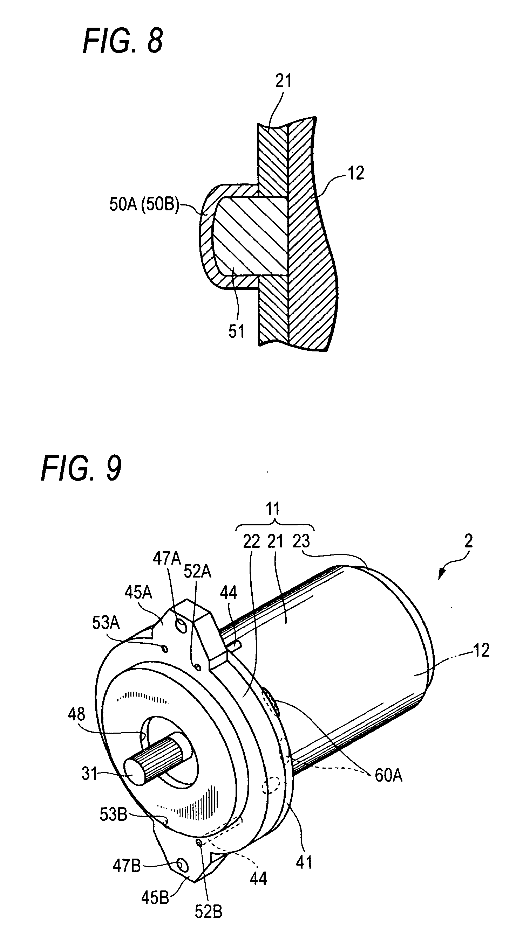

The first embodiment has described the case where the ribs 50A, 50B, each including a solid essentially-rectangular-parallelepiped, are arranged on the exterior surface of the motor yoke 21. However, the present invention is not limited to this embodiment. For instance, as shown in Fig. 6, the ribs 50A, 50B can also be formed so as to assume an essentially-dome-shaped cross-sectional profile and a desired shape. Moreover, as shown in Fig. 7, the ribs 50A, 50B may also protrude from the motor yoke 21 such that clearance C is formed between the ribs and the exterior surface of the motor section 12. In this case, as shown in Fig. 8, the clearance C may also be filled with a damping material 51, such as resin, an adhesive, or the like. So long as the damping material 51 is filled, the damping material 51 can efficiently absorb vibration, so that generation of vibration noise and operating noise can be lessened to a much greater extent. Use of a material having a high damping factor for such a damping material 51 is desirable.

### (Second Embodiment)

Amotor for electric power steering of a second embodiment of the present invention will now be described by reference to the drawings. In the second embodiment, those members analogous to those of the first embodiment are assigned the same reference numerals, and their detailed explanations are omitted.

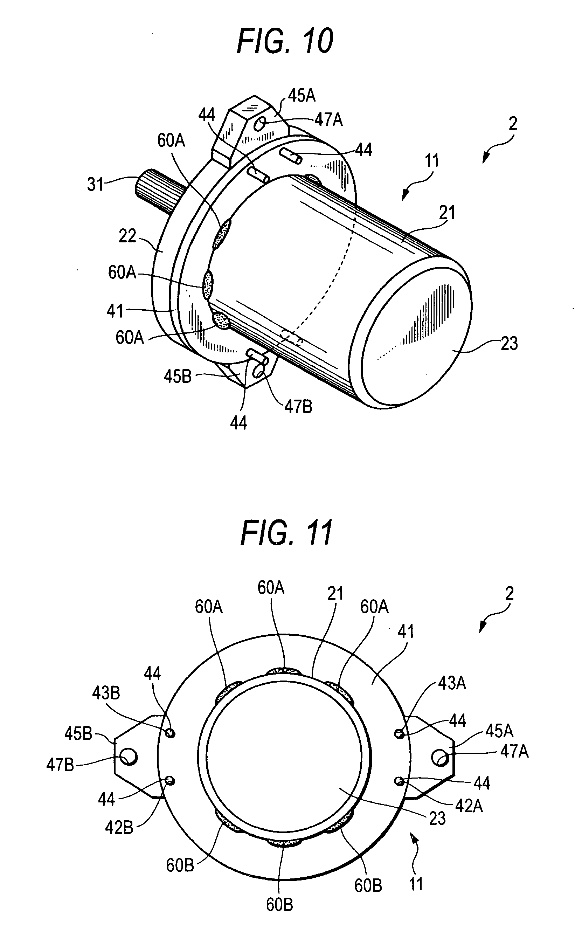

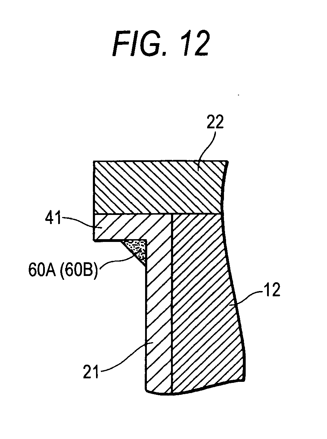

Fig. 9 is a perspective view of a motor for electric power steering of the second embodiment of the present invention. Fig. 10 is a perspective view of the motor for electric power steering shown in Fig. 9 when viewed from an oblique position opposite an output side of the motor. Fig. 11 is a plan view of the motor for electric power steering purpose shown in Fig. 9 when viewed from a position opposite the output side of the motor. Fig. 12 is a view showing, in the form of a cross section, a portion of the motor for electric power steering purpose shown in Fig. 9.

As shown in Figs. 9 to 12, a principal difference between a motor 2 for electric power steering purpose of the second embodiment and the motor 1 of the first embodiment lie in that fillets 60A, 60B are formed in the areas between the extended sections for attachment purposes 45A, 45B and in the vicinity of a boundary between the front flange 22 and the motor yoke 21 instead of provision of the ribs 50A, 50B.

Specifically, as shown in Figs. 9 to 12, the motor 2 of the second embodiment is formed by including a motor cover 11 analogous to the motor cover 11 of the motor 1 of the first embodiment, and a motor section 12 provided in this motor cover 11.

In the motor cover 11, the fillets 60A, 60B are placed at six positions, the fillets 60A at three positions and the fillets 60B at the other three positions, in a region folded for extension of the flange 41 of the motor yoke 21 and within the areas between the extended sections for attachment purposes 45A, 45B. As shown in Fig. 12, the fillets 60A, 60B may also assume an essentially-triangular cross-sectional profile or an essentially-quarter-disk-shaped (fan-shaped) form. The fillets 60A, 60B may also be formed from the same material as that of the motor yoke 21. In this case, the fillets 60A, 60B may also be formed integrally with the motor yoke 21.

In the motor 2 having this configuration, the motor cover 11 is reinforced by the fillets 60A, 60B. By means of the fillets 60A, 60B, the natural vibration of the motor cover 11 is suppressed. Consequently, the amplitude of vibration can be diminished, and vibration is dampened. Thus, the generation of vibration noise and operating noise can be lessened.

The second embodiment has described the case where the fillets 60A, 60B are arranged in the region folded for extension of the flange 41 of the motor yoke 21 and in the respective areas between the extended sections for attachment purpose 45A, 45B. However, the present invention is not limited to this embodiment. The fillets 60A, 60B may also be arranged over the entire circumference of the region folded for extension of the flange 41 of the motor yoke 21. Alternatively, the number of positions where the fillets 60A, 60B are arranged is not limited to three and can also be determined arbitrarily.

In the second embodiment, the fillets 60A, 60B are formed in the region folded for extension of the flange 41 of the motor yoke 21. However, as a matter of course, the fillets 60A, 60B may also be formed in another area, so long as they are positioned between the extended sections for attachment purpose 45A, 45B and in the vicinity of the boundary between the motor yoke 21 and the front flange 22.

In the motor for electric power steering of the present invention, both the fillets 60A, 60B of the second embodiment and the ribs 50A, 50B of the first embodiment may also be formed.

### (Third embodiment)

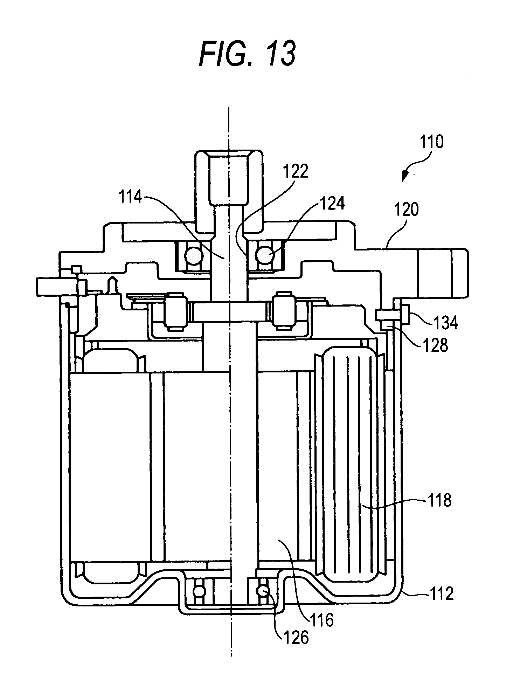

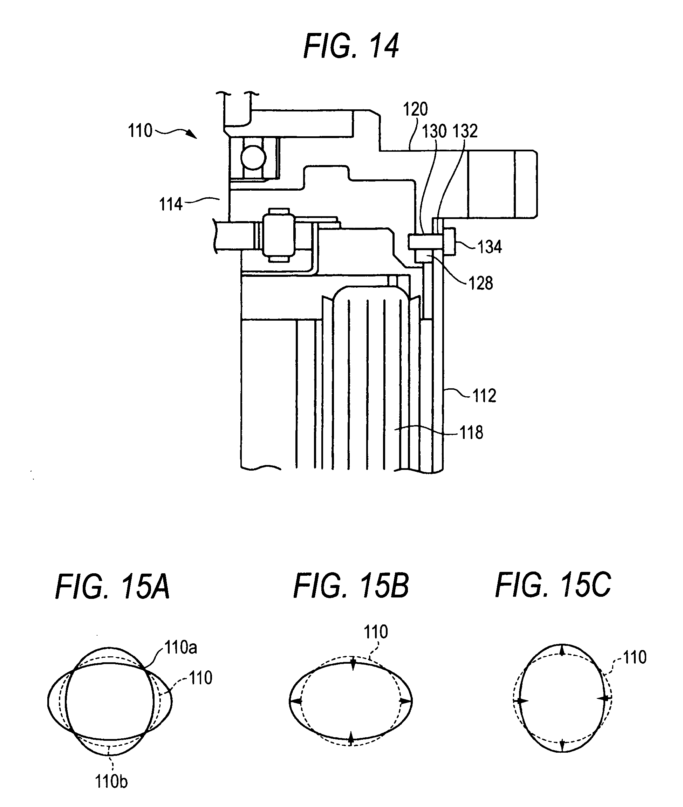

An embodiment of the present invention will be described hereunder by reference to the drawings. Fig. 13 is a longitudinal cross-sectional view of an EPS motor showing an embodiment of the present invention. Fig. 14 is an enlarged cross-sectional view of the principal section of the EPS motor. In Figs. 13 and 14, an EPS motor 110 serves as a rotating electrical machine and has a cylindrical yoke 112 having a bottom. A rotor 116 fixed to a rotary shaft 114 and a stator 118 fixed to an inner wall surface of the yoke are housed opposite each other within the yoke 112. A flange 120 formed into an essentially-disc-shaped form is arranged at an open-section-side of the yoke 112. One end of the rotary shaft 114 protrudes from a through hole 122 formed in the essential-center portion of the flange 120. The one end of the rotary shaft 114 is rotatably supported by a bearing 124 fixed to the flange 120, and the other end of the rotary shaft 114 is rotatably supported by the bearing 126 fixed to the bottom of the yoke 112.

A plurality of mount sections 128 protruding along the rotary shaft 114 are formed in a circumferential direction on a face of the flange 120 opposing the stator 118. An extremity portion of the open section of the yoke 112 is press-fitted or caulk-fitted to an outer periphery of each of the mount sections 128, whereby the yoke 112 is fixed to the flange 120. In order to fix the yoke 112 to the flange 120 more firmly, a tapped hole 130 is formed, along the radial direction of the flange 120, in each of the mount sections 128 of the present embodiment, and through holes 132 are formed in the yoke 112 in correspondence to the respective tapped holes 130. A screw 134 serving as a fixing member is inserted into each of the through holes 132, and the extremity portion of the open-section-side of the yoke 112 is firmly fixed to the respective mounting sections 128 as a result of the screws 134 being fixed to the corresponding tapped holes 130. Rivets can also be used as fixing members in place of the screws 134.

The respective mount sections 128 formed in the face of the flange 120 opposing the stator 118 effect positioning of the phase of a harness and the mount phase of a steering column. The structure for fixing the yoke 112 to the respective mount sections 128 via the screws 134 acts as a structure for stopping whirling of the yoke 112. When the plurality of mount sections 128 are formed on the flange 120, an odd number of mount sections 128 are formed circularly on a circumferential direction at uniform intervals, or an even number of mount sections 128 can be formed circularly on the circumferential direction at nonuniform intervals.

According to the present embodiment, even when the weight of the EPS motor 110 is made equal to that of a conventional EPS motor, mount sections need not to be formed circularly on the open side of the yoke 112 as compared with the case of the conventional EPS motor. Hence, mounting rigidity can be enhanced by an amount corresponding to the weight. Rigidity against vibration induced by the yoke 112 or the stator 118 can be enhanced. Meanwhile, even when rigidity against the vibration of the EPS motor 110 is made equal to that of the conventional EPS motor, mount sections do not need to be formed circularly on the open section side of the yoke 112, and hence the weight of the EPS motor can be lessened.

Moreover, according to the present embodiment, when the yoke 112 is fixed to the flange 120, the extremity portion of the open-section-side of the yoke 112 is press-fitted or caulk-fitted to the outer periphery side of each of the mount sections 128, and the screws 134 are screw-engaged with the respective tapped holes 130, to thus firmly fix the extremity portion on the open-section-side of the yoke 112 to the respective mount sections 128. Hence, vibration induced by the yoke 112 or the stator 118; for instance, annular secondary natural vibration, can be dampened effectively as described below.

As shown in Figs. 15A to 15C, in connection with the natural vibration of the motor, an annular secondary natural vibration mode appears as contour vibration of the EPS motor 110. Specifically, when no vibration appears, the EPS motor (the stator and the yoke) 110 has a contour as indicated by dotted lines. However, in an annular secondary natural vibrationmode, the EPS motor 110 alternately, continually repeats two modes; a mode in which upper and lower sides of the contour of the EPS motor 110 contract in a radial direction thereof and right and left sides of the same expand in the radial direction, as shown in Fig. 15B; and another mode in which the right and left sides of the contour contract in the radial direction and the upper and lower sides of the contour expand in the radial direction thereof, as shown in Fig. 15C. Consequently, as a result of repetition of vibration in the annular secondary natural vibration mode, a node of vibration (i.e., the minimum amplitude of vibration) 110a and a loop of vibration (i.e., the maximum amplitude of vibration) 110b arise in the contour of the EPS motor 110, as shown in Fig. 15A.

### (Fourth embodiment)

A motor mount structure of a preferred embodiment of the present invention will be described hereunder by reference to the accompanying drawings.

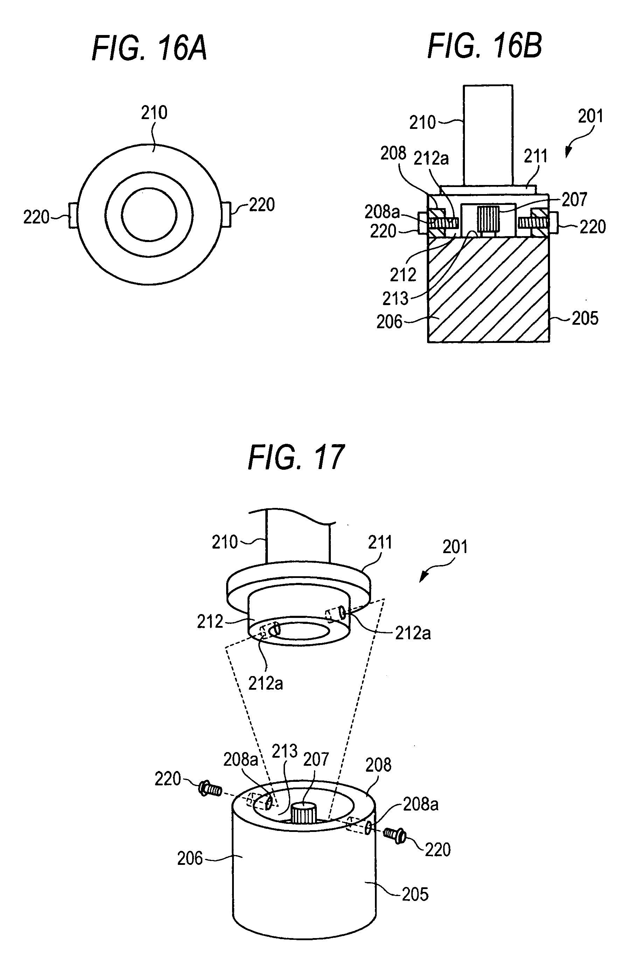

Fig. 16 is a side cross-sectional view and a plane cross-sectional view of a motor mount structure provided as an embodiment of the present invention. Fig. 17 is an exploded perspective view for describing the mounted state of the motor.

In the motor mount structure of the present embodiment, a motor assembly (a motor) 205 has a yoke 206, an output shaft 207 projecting outside from the axial inside of the yoke 206, and a motor-side socket and spigot joint 208 which circularly surrounds the output shaft 207 and projects in the same direction as does the output shaft 207. A gear box assembly (a motor mount) 210 has a housing 211, and a gear-box-side socket and spigot joint (a projecting section) 212projectsfromthehousing 211 toward the motor assembly 205. The gear-box-side socket and spigot joint 212 is circularly formed so as to surround the center axis, and the outside diameter of the socket and spigot joint 212 is made essentially identical with the inside diameter of the motor-side socket and spigot joint 208. Thus, the gear-box-side socket and spigot joint 212 is formed so as to fit into a recess section 213 formed from the motor-side socket and spigot joint 208.

Two bolt holes 208a are formed in the motor-side socket and spigot joint 208 so as to oppose each other across the center axis, and two bolt holes 212a are formed in the gear-box-side socket and spigot joint 212 so as to oppose each other across the center axis. The bolt holes 208a and 212a are brought into a straight line with the motor-side socket and spigot joint 208 and the gear-box-side socket and spigot joint 212 being fitted together.

In the motor mount structure of the present embodiment configured as mentioned above, the motor assembly 205 is fixed to the gear box assembly 210 as follows. The gear-box-side socket and spigot joint 212 of the gear box assembly 210 is inserted into the motor-side socket and spigot joint 208 of the motor assembly 205, whereby the motor assembly 205 and the gear box assembly 210 are fitted together. At this time, the angle of the motor assembly 205 is adjusted such that the bolt holes 208a and 212a are aligned with each other. Next, a bolt (fixing member) 220 is screw-engaged to each of the bolt holes 208a and 212a. In the present embodiment a bolt 220 is screw-engaged with each of two pairs of bolt holes 208a and 212a. Thereby, the motor assembly 205 is fixed to the gear box assembly 210.

As mentioned above, in relation to the motor mount structure of the present embodiment, the motor assembly 205 is fitted to the gearbox assembly 210, and they are fixed together by means of the bolts 220. Therefore, the degree of mount freedom of the motor assembly 205 can be enhanced. Specifically, in a related-art motor mount structure, fixing projections (see reference symbol 306 of Fig. 18) corresponding to the fixing sections of the gear box are provided on the motor so as to project in a radially-outside direction are bolted in an axial direction. Specifically, in order to ensure the positions where the bolts are to be fixed, limitations have been imposed on the degree of freedom of mounting of the motor and the gear box. However, according to the motor mount structure of the present embodiment, bolts are fixed from the radial outside positions toward inner positions. Hence, limitations of provision of the fixing projections are not imposed on the structure, and the ease of layout of the motor assembly 205 to be placed in a narrow space can be enhanced.

Moreover, provision of fixing projections projecting in a radially external direction as required in the related art is obviated, and a weight reduction can be achieved. Especially, in order to increase the number of fixing positions (bolts), fixing projections must have conventionally been increased in equal number to the bolts. In the present embodiment, the number of locations where fixing is achieved by means of a bolt can be increased without provision of the fixing projections. Therefore, an increase in rigidity can be achieved with an increase in weight being minimized.

Moreover, the motor-side socket and spigot joint 208 and the gear-box-side socket and spigot joint 212 are fittedtogether over a wide area, and therefore high rigidity can be achieved. Further, since high rigidity can be achieved as mentioned above, the structure becomes advantageous in terms of vibration, and noise resulting from operation is improved.

In the above embodiment, two positions on the motor assembly are fixed by the bolts 220, but the number of fixing positions may be increased further in a circumferential direction of the motor assembly. This enables adjustment of a natural vibration mode attributable to the rigidity of mounting of the motor, which is more effective as countermeasures to noise. Although the above embodiment has mentioned, by way of an example, the shape by means of which the gear-box-side socket and spigot joint 212 of the gear box assembly 210 fits to the recess section 213 of the motor assembly 205, there may also be adopted a shape by means of which projections provided on the motor assembly 205 conversely fit into recess sections formed in the gear box assembly 210. Even in this case, there can be yielded the same advantage as that yielded above. In the above descriptions, the motor-side socket and spigot joint 208 and the gear-box-side socket and spigot joint 212 are provided circularly. However, the socket and spigot joints may be provided in the form of a shape other than an annular shape. Any shape may be adopted, so long as the shape enables fitting of the motor assembly 205 to the gear box assembly 210.

The orientation of the bolt holes 208a and that of the bolt holes 212a may also be set, as a modification of the embodiment, in such a way that the orientation of the bolts forms a slight angle in a radial direction. As a result, axial pressing force imposed on the motor assembly 205 by the bolts 220 can be ensured.

## Claims

1. A motor for electric power steering comprising:
a motor section for generating rotational torque, and
a motor cover which houses the motor section is fixed to a column, wherein
the motor cover has a yoke section and a flange section which is disposed at one end of the yoke section and fixed to the column at a plurality of positions; and
the yoke section has at least one rib provided on an exterior surface located between positions where the flange section is fixed to the column.

2. The motor for electric power steering according to claim 1, wherein
the rib is provided along an axial direction of the motor section.

3. The motor for electric power steering according to claim 1, wherein
the rib projects from the yoke section such that clearance is formed between the rib and the exterior surface of the motor section, and
the clearance is filled with a damping material.

4. The motor for electric power steering according to claim 1, wherein
the rib is formed integrally with the yoke.

5. The motor for electric power steering according to claim 3, wherein
the damping material is made of at least one of resin and an adhesive.

6. A motor for electric power steering comprising:
a motor section for generating rotational torque, and
a motor cover which houses the motor section is fixed to a column, wherein
the motor cover has a yoke section and a flange section which is disposed at one end of the yoke section and fixed to the column at a plurality of positions; and
a fillet is formed in areas between locations where the flange section is fixed to the column and at least in a portion of a neighborhood of a boundary between the yoke section and the flange section.

7. The motor for electric power steering according to claim 6, wherein
the yoke section is also provided with at least one rib provided on an exterior surface located between the locations where the flange section is fixed to the column.

8. A rotating electrical machine comprising:
a rotor fixed to a rotary shaft;
a stator disposed opposite the rotor;
a yoke which is formed into a cylindrical shape with a bottom, houses the rotor and the stator, and rotatably supports a rotary shaft of the rotor; and
a flange for closing the open section of the yoke, wherein
amount sectionproj ecting along the rotary shaft is formed on a face of the flange opposing the stator, and
an open section side of the yoke is fixed by the mount section.

9. The rotating electrical machine according to claim 8, wherein
the open section side of the yoke is press-fitted or caulk-fitted to the mount section.

10. The rotating electrical machine according to claim 8, wherein
the open section side of the yoke and the mount section are fixed together by way of a fixing member.

11. The rotating electrical machine according to claim 8, wherein
the mount section to which the open section side of the yoke is fixed determines positioning of a phase of a harness or a mounting phase of a steering column or stoppage of whirling of the yoke.

12. The rotating electrical machine according to claim 8, wherein
the mount section is formed in an odd number and in a circular pattern at uniform intervals on the flange.

13. The rotating electrical machine according to claim 8, wherein
the mount section is formed in an even number and in a circular pattern at nonuniform intervals on the flange.

14. A motor mount structure, comprising:
a motor; and
a motor mount to which the motor is to be fixed, wherein
either the motor or the motor mount is provided with a projecting section extending toward a remaining one;
the remaining one is provided with a recess section into which the projection section fits; and
the recess section and the projecting section are fixed together by means of the fixing member with the motor, the motor mount being fitted together by means of the projecting section and the recess section.

15. The motor mount structure according to claim 14, wherein
a direction in which the projecting section and the recess section are fixed together by the fixing member is formed in a radial direction of the motor.

16. The motor mount structure according to claim 15, wherein
the projecting section and the recess section are fixed together by the plurality of fixing member at a location where the projecting section fits into the recess section.

17. The motor mount structure according to claim 15, wherein
a fixing direction of the fixing member forms a slight angle in a radial direction of the motor.
